# EUROPEAN PATENT APPLICATION

(11) **EP 4 799 785 A1**
(43) Date of publication of application: **02.09.2026**
(21) Application number: 24881991.4
(22) Date of filing: 07.08.2024
(51) Int. Cl.: B29C 31/00

(54) **RAW MATERIAL VERIFICATION SYSTEM AND RAW MATERIAL VERIFICATION METHOD**

(30) Priority: 27.10.2023 JP 2023184519
(71) Applicant: Hitachi, Ltd., Tokyo 100-8280 (JP)
(72) Inventor: KAMBAYASHI, Takuya, Tokyo 100-8280 (JP); AMASAKI, Shimpei, Tokyo 100-8280 (JP); YAGI, Daisuke, Tokyo 100-8280 (JP)
(74) Representative: Mewburn Ellis LLP
(86) International application number: PCT/JP2024/028348
(87) International publication number: WO 2025/088874

(57) **Abstract**

A raw material verification system is a system used to manage a quality of a resin molded article produced from two or more types of raw materials, and includes: a raw material data acquisition part which acquires a raw material data including data of analysis results of the two or more types of raw materials; a material analysis data acquisition part which acquires a material analysis data of the resin molded article; and an arithmetic processing part which performs a predetermined arithmetic processing based on the raw material data and the material analysis data. The arithmetic processing part verifies a raw material blending ratio included in the raw material data and a material content ratio included in the material analysis data, and determines whether or not the material content ratio falls within a specification range of the resin molded article. Accordingly, it is possible to scientifically prove a ratio of a raw material contained in a resin molded article and manage the ratio as a history information of a final product.

## Description

### Technical Field

This disclosure relates to a raw material verification system and a raw material verification method.

### Background Art

With the development of artificial intelligence (AI) and machine learning technology, automation has recently been advanced in various fields. Also in the field of quality management, a technology of performing processing automatically and accurately is advancing.

With the aim of providing a dispensing system or the like which enables dispensing automatically, there has been disclosed in Patent Literature 1, a dispensing system which prepares a dispensing material based on prescription information, performs dispensing using the prepared dispensing material, and prepares shipping of a drug dispensed in a dispensing unit, and which verifies the accuracy of the dispensed drug from the weight of the drug based on the prescription information and the weight of the dispensed drug.

There has been disclosed in Patent Literature 2, an injection molding condition generation system which generates an injection molding condition of injection molding using a resin material, based on a target value of a quality parameter related to the quality of a molded article, a material characteristic value, and a predetermined relational expression by using a computer with the aim of improving the quality of injection molding, and in which the predetermined relational expression is an expression showing a relationship between a material characteristic value of the resin material, a plurality of injection molding conditions input to an injection molding machine, and a quality parameter related to the quality of the molded article molded by the injection molding machine on the basis of the material characteristic value and each injection molding condition, and the material characteristic value, the injection molding conditions, and the quality parameter of the resin material are associated with each other and generated based on data accumulated in a memory.

### Citation List

### Patent Literature

PTL 1: Japanese Unexamined Patent Application Publication No. 2022-124444
PTL 2: Japanese Unexamined Patent Application Publication No. 2022-141495

### Summary of Invention

### Technical Problem

When a resin molded article is manufactured using an injection molding machine, resin pellets of a recycled material and a virgin material, which are raw materials, are prepared, and then melted, stirred, and injected into a mold to be molded. In this case, the ratio (data included in production data) between the recycled material and the virgin material included in each of the actually continuously manufactured resin molded articles may not match the ratio (data included in production data) between the recycled material and the virgin material of the raw material to be input to the injection molding machine due to variations in the amounts of the recycled material and the virgin material supplied during preparing, unevenness in the case where the mixing before melting is insufficient, and the like. Therefore, it is difficult to prove the usage amount (content ratio) of the recycled material in the resin molded article only by the production data. It is difficult to scientifically prove the content ratio of the recycled material using only easily obtainable data such as weight.

Therefore, there is a case in which the third party institution is requested to issue a certificate regarding the content ratio of the recycled material. However, in this case, the issuance of the certificate requires time and cost.

In Patent Literature 1, the prepared drug is a target of quality control.

In Patent Literature 2, the quality of injection molding is improved by appropriate injection molding conditions.

An object of the present disclosure is to scientifically prove a ratio of a raw material contained in a resin molded article and manage the ratio as a history information of a final product.

### Solution to Problem

A raw material verification system of the present disclosure is a system used to manage the quality of a resin molded article produced from two or more types of raw materials, and includes: a raw material data acquisition part which acquires raw material data including data of analysis results of the two or more types of raw materials; a material analysis data acquisition part which acquires material analysis data of the resin molded article; and an arithmetic processing part which performs predetermined arithmetic processing based on the raw material data and the material analysis data. The arithmetic processing part verifies a raw material blending ratio included in the raw material data and a material content ratio included in the material analysis data, and determines whether or not the material content ratio falls within a specification range of the resin molded article.

### Advantageous Effects of Invention

According to the present disclosure, it is possible to scientifically prove a ratio of a raw material contained in a resin molded article and manage the ratio as a history information of a final product.

### Brief Description of Drawings

FIG. 1 is a schematic configuration diagram illustrating a raw material verification system according to an embodiment.
FIG. 2 is a flowchart illustrating a raw material verification method according to a first embodiment. Description of Embodiments

Hereinafter, embodiments of the present disclosure will be described based on the drawings. The embodiments are illustrations for describing the present disclosure, and are omitted and simplified as appropriate for clarity of description. The present disclosure can be implemented even in various other forms. Unless otherwise limited, each component may be singular or plural.

The position, size, shape, range, and the like of each component illustrated in the figures may not represent the actual position, size, shape, range, and the like to facilitate the understanding of the invention. Therefore, the present disclosure is not necessarily limited to the positions, sizes, ranges, and the like disclosed in the figures.

Examples of various types of information may be described by expressions such as a "table", a "list", and a "queue", but various types of information may be represented by data structures other than these. For example, various types of information such as an "XX table", an "XX list", and an XX queue" may be referred to as "XX information". When describing identification information, expressions such as "identification information", "identifier", "name", "ID", and "number" are used, but they can be replaced with each other.

In the case where there are a plurality of components having the same or similar functions, they may be described with different subscripts attached to the same reference numerals. Further, in the case where there is no need to distinguish these plural components, they may be described with the subscripts omitted.

In the embodiment, processing performed by executing a program may be described. Here, a computer executes a program by a processor (e.g., a CPU or a GPU), and performs processing determined by a program while using a storage resource (e.g., a memory), an interface device (e.g., a communication port), or the like. Therefore, the subject of processing performed by executing the program may be a processor. Similarly, the subject of the processing performed by executing the program may be a controller, a device, a system, a computer, or a node having a processor. The subject of the processing performed by executing the program may be an arithmetic unit, and may include a dedicated circuit which performs specific processing. Here, the dedicated circuit is, for example, an FPGA (Field Programmable Gate Array), an ASIC (Application Specific Integrated Circuit), a CPLD (Complex Programmable Logic Device), or the like.

The program may be installed on a computer from a program source. The program source may be, for example, a program distribution server or a computer-readable storage medium. When the program source is a program distribution server, the program distribution server may include a processor and a storage resource storing a program to be distributed, and the processor of the program distribution server may distribute the program to be distributed to another computer. Further, in the embodiment, two or more programs may be implemented as one program, or one program may be implemented as two or more programs.

### Embodiment

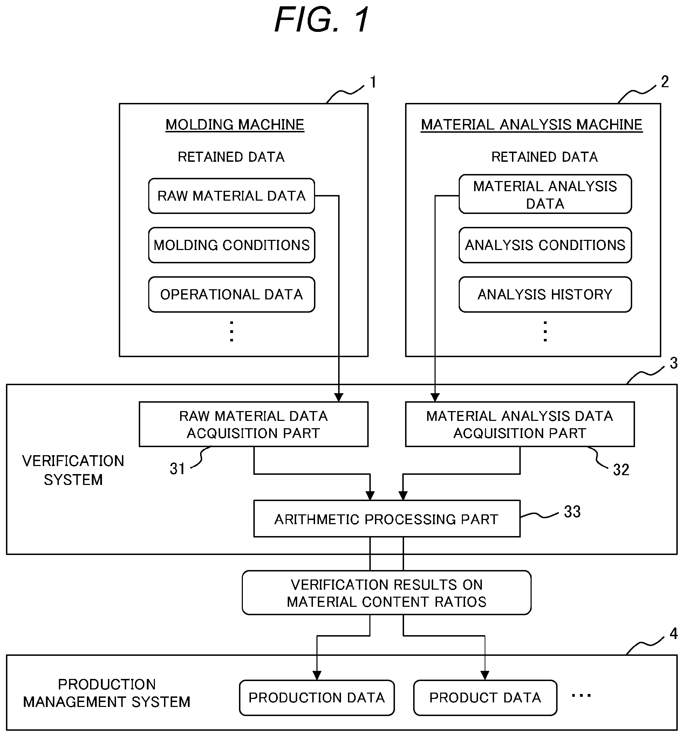

FIG. 1 is a schematic configuration diagram illustrating a raw material verification system according to an embodiment.

In the present figure, the raw material verification system 3 includes a raw material data acquisition part 31, a material analysis data acquisition part 32, and an arithmetic processing part 33. The raw material data acquisition part 31 acquires raw material data or the like of a molding machine 1. The molding machine 1 is a device which molds a resin, and is, for example, an injection molding machine, an extrusion molding machine, a blow molding machine, a vacuum molding machine, or the like. The material analysis data acquisition part 32 acquires material analysis data or the like of a material analysis machine 2. Here, the raw material refers to a resin pellet which is a raw material of a resin molded article. Further, the material refers to a sample of a resin molded article to be analyzed. The resin molded article is a component, a product, or the like manufactured by the molding machine 1 by mixing two or more types of raw materials. In the present embodiment, at least one of the two or more types of raw materials is a recycled material.

The raw material data includes data of analysis results of two or more types of raw materials. In the present embodiment, the raw material data includes data of analysis results of a virgin material and a recycled material of a resin. The virgin material, the recycled material, and the like may be analyzed in advance by the material analysis machine 2. The raw material data is included in production data, and includes data on the content ratio of the recycled material determined in the design of the resin molded article. Further, the material analysis data is included in product data obtained by analyzing a sample of an actually manufactured resin molded article by the material analysis machine 2.

In the present specification, the term "virgin material" refers to a resin manufactured using only a new material, that is, an unused/unprocessed resin. The "recycled material" refers to a resin material defined in accordance with JIS Q14021: 2000, and includes a resin material taken out of the flow of waste in the manufacturing process and a resin material recovered after a consumer has used a product. It is desirable to use the virgin and recycled resin materials of the resin in the form of resin pellets.

The arithmetic processing part 33 acquires necessary data or the like from the raw material data acquisition part 31 and the material analysis data acquisition part 32, performs predetermined arithmetic processing, verifies the raw material blending ratio calculated from the raw material data and the material content ratio calculated from the material analysis data, and sends data such as the result to a production management system 4. The production management system 4 stores the data received from the arithmetic processing part 33 separately into the production data and the product data. Here, the "raw material blending ratio" refers to the ratio of the recycled material to the virgin material in the raw material charged into the molding machine 1. Further, the "material content ratio" refers to the ratio between the recycle material and the virgin material included in each of the actually continuously manufactured resin molded articles.

Incidentally, in addition to the raw material data, the molding machine 1 also stores data of molding conditions, operational data, and the like. In addition to the material analysis data, the material analysis machine 2 also stores data such as an analysis condition and an analysis history.

In the analysis method in the material analysis machine 2, a non-destructive measurement is preferable when targeting parts or products. Therefore, in the present embodiment, a fluorescence spectroscopy is used which is non-destructive measurement. By applying a multivariate analysis or the like to the data of the result obtained using the fluorescence spectroscopy, it is possible to calculate the components constituting the material and the ratio thereof. However, methods other than the above may be used as the material analysis, and for example, a nuclear magnetic resonance analysis (NMR), a thermal analysis such as a differential scanning calorimeter (DSC), a near-infrared analysis (NIR), a mid-infrared analysis (MIR), a Raman spectroscopic analysis, an electron spin resonance (ESR), and the like may be used. Incidentally, the NMR, DSC, and the like are destructive analysis.

It is desirable that the raw material verification system 3 has a database. It is desirable to store in the database, for example, data accumulated by learning a raw material data through a machine learning or the like, correlations between the results obtained by analyzing materials for components and products and other analytical results (for example, destructive analysis), correlations between the proportion of a specific component or a recycled material which constitutes a material and the properties of a material sample such as a tensile strength and an impact strength, etc.

Incidentally, the raw material verification system 3 may store at least one of the production data and the product data stored in the production management system 4 in the database. In this case, it is desirable that at least one of the production data and the product data is stored in association with a result obtained by verification by the arithmetic processing part 33.

Further, the raw material verification system 3 may have both a configuration and a function of the production management system 4.

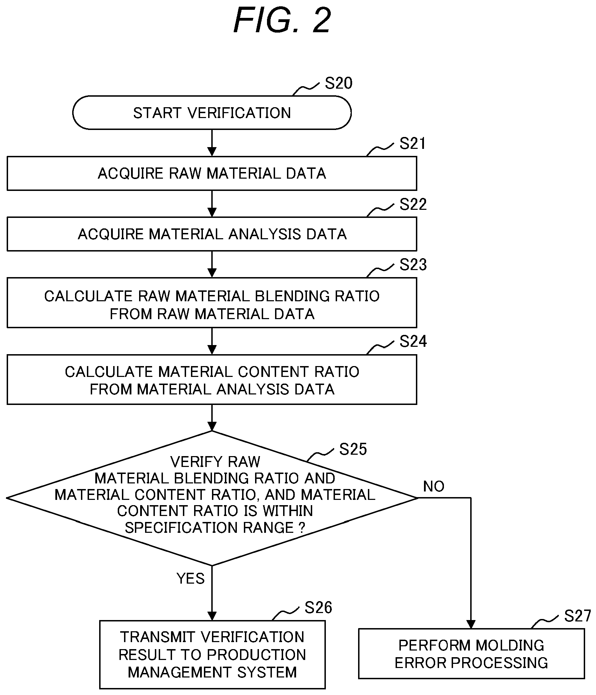

FIG. 2 is a flowchart illustrating a raw material verification method according to the present embodiment.

In the present figure, when the raw material verification system 3 in FIG. 1 starts verification (Step S20), the raw material data acquisition part 31 acquires raw material data or the like of the molding machine 1 (Step S21). Then, the material analysis data acquisition part 32 acquires material analysis data or the like of the material analysis machine 2 (Step S22).

Next, the arithmetic processing part 33 calculates a raw material blending ratio from the raw material data (Step S23).

Further, the arithmetic processing part 33 calculates the material content ratio from the material analysis data (Step S24).

Incidentally, when the raw material blending ratio is included in the raw material data or when the material content ratio is included in the material analysis data, Steps S23 and S24 can be omitted.

Thereafter, the arithmetic processing part 33 verifies the raw material blending ratio and the material content ratio, and determines whether the material content ratio falls within the specification range of the resin molded article (Step S25). At least one of the verifying step and the determining step may be performed using an artificial intelligence (AI).

When the determination result falls within the specification range of the resin molded article, the determination result is transmitted to the production management system 4 (Step S26). On the other hand, when it does not fall within the specification range, processing is performed as a molding error (Step S27). Also in Step S27, the determination result is transmitted to the production management system 4.

Incidentally, when the material content ratio does not fall within the specification range of the predetermined resin molded article, that is, when the material content ratio falls outside the specification range, the production management system 4 transmits a signal to stop the manufacture of the molding machine 1 molding the raw material to a manufacturing device. This signal may be transmitted from the raw material verification system 3 in Step S27.

Hereinafter, the effects of the raw material verification system and the raw material verification method according to the present disclosure will be collectively described.

According to the present disclosure, it is possible to prove the ratio or the like of the raw material included in the resin molded article, based on a scientific basis.

Further, the production data or the product data stored in association with the verification result can be managed as a history information of a final product.

Furthermore, since it is easy to confirm the raw material blending ratio or the material content ratio of the resin molded article in its own company, there is an advantage that it is not necessary to request the third party institution.

### Reference Signs List

1: molding machine
2: material analysis machine
3: raw material verification system
4: production management system
31: raw material data acquisition part
32: material analysis data acquisition part
33: arithmetic processing part

## Claims

1. A raw material verification system used to manage a quality of a resin molded article produced from two or more types of raw materials, comprising:
a raw material data acquisition part which acquires a raw material data including a data of analysis results of the two or more types of raw materials;
a material analysis data acquisition part which acquires a material analysis data of the resin molded article; and
an arithmetic processing part which performs a predetermined arithmetic processing based on the raw material data and the material analysis data, wherein
the arithmetic processing part verifies a raw material blending ratio included in the raw material data and a material content ratio included in the material analysis data, and determines whether or not the material content ratio falls within a specification range of the resin molded article.

2. The raw material verification system according to Claim 1, wherein
at least one of the two or more types of raw materials is a recycled material.

3. The raw material verification system according to Claim 1, further including a database, wherein
the database stores a production data including the raw material data in association with a result obtained by verification by the arithmetic processing part.

4. The raw material verification system according to Claim 1, further including a database, wherein
the database stores a production data including the material analysis data in association with a result obtained by verification by the arithmetic processing part.

5. The raw material verification system according to Claim 1, wherein
when the material content ratio falls outside the specification range of the predetermined resin molded article, a signal to stop the manufacture of the resin molded article is transmitted to a manufacturing device.

6. A raw material verification method used to manage a quality of a resin molded article produced from two or more types of raw materials, comprising the steps of:
acquiring by a raw material data acquisition part, a raw material data including data of analysis results of the two or more types of raw materials;
acquiring by a material analysis data acquisition part, a material analysis data of the resin molded article; and
performing by an arithmetic processing part, a predetermined arithmetic processing based on the raw material data and the material analysis data, wherein
the arithmetic processing includes a step of verifying a raw material blending ratio included in the raw material data and a material content ratio included in the material analysis data, and determining whether or not the material content ratio falls within a specification range of the resin molded article.

7. The raw material verification method according to Claim 6, wherein
at least one of the two or more types of raw materials is a recycled material.

8. The raw material verification method according to Claim 6, wherein
a database further includes a step of storing production data including the raw material data in association with a result obtained by the verification by the arithmetic processing part.

9. The raw material verification method according to Claim 6, wherein
a database further includes a step of storing production data including the material analysis data in association with a result obtained by the verification by the arithmetic processing part.

10. The raw material verification method according to Claim 6, further including a step of transmitting a signal to stop the manufacture of the resin molded article to a manufacturing device when the material content ratio falls outside the specification range of the predetermined resin molded article.
